# EUROPEAN PATENT SPECIFICATION

(11) **EP 2 114 719 B1**
(45) Date of publication and mention of the grant of the patent: **05.12.2012**
(21) Application number: 08705340.1
(22) Date of filing: 22.01.2008
(51) Int. Cl.: B60W 30/14, B60W 10/06, B60W 10/184

(54) **Method for controlling the target speed of a cruise control system, and cruise control system**
Verfahren zur Steuerung der Sollgeschwindigkeit eines Fahrgeschwindigkeitsregelungssystems und Fahrgeschwindigkeitsregelungssystem
Procédé de contrôle de la vitesse cible d'un système de réglage de vitesse, et système de réglage de vitesse

(30) Priority: 30.01.2007 SE 0700206
(43) Date of publication of application: 11.11.2009
(73) Proprietor: Scania CV AB (PUBL), 151 87 Södertälje (SE)
(72) Inventor: RICKMAN, Johnny, S-152 71 Södertälje (SE); WINGREN, Anna, S-151 38 Södertälje (SE); WICKSTRÖM, Samuel, S-151 71 Södertälje (SE)
(86) International application number: PCT/SE2008/050068
(87) International publication number: WO 2008/094114

(56) References cited:
- EP-A1- 1 013 520
- US-A- 4 211 193
- US-A- 4 467 428
- US-A- 5 019 986
- US-A- 5 944 766
- US-A- 5 979 582
- US-B1- 6 374 173

## Description

### FIELD OF THE INVENTION AND PRIOR ART

The present invention relates to a cruise control system for a motor vehicle according to the preamble of claim 11. The invention also relates to a method for controlling the target speed of such a cruise control system. Furthermore, the invention relates to a computer program comprising computer program code for implementing a method according to the invention, a computer program product comprising a data storage medium readable by an electronic control unit and having said computer program stored thereon, and an electronic control unit.

### BACKGROUND ART

Motor vehicles, such as cars, lorries, towing vehicles and buses, are often provided with a so-called cruise control system, also denominated speed control system, for automatically controlling the vehicle speed. Such a control system comprises means, such as a speed sensor, for monitoring the actual vehicle speed. The cruise control system compares the actual vehicle speed with a set target speed. The target speed may for instance be entered into the cruise control system as the prevailing actual vehicle speed when a set switch is actuated by the driver. The cruise control system generates an error signal by comparing the actual vehicle speed with the target speed. The error signal is then for instance used to control an actuator coupled to the fuel pump or to the vehicle throttle in order to change the engine speed until the error signal is substantially zero, i.e. until the actual vehicle speed is equal to the target speed.

Cruise control systems have been proposed and developed, which allow the target speed to be increased at the end of a downhill slope and to be maintained at an increased level for a certain period of time thereafter so as to thereby allow the vehicle to enter a following uphill slope at a speed above the target speed set by the driver. Hereby, the vehicle will take better advantage of the kinetic energy gained when descending the previous downhill slope. Such a cruise control system is for instance known from US 4 467 428 A.

Heavy motor vehicles, such as lorries, towing vehicles and buses, are often provided with brake control means which can be enabled by the driver of the vehicle in order to automatically control one or several brakes of the vehicle so as to restrict the speed of the vehicle when the vehicle descends a downhill slope. A target speed for the brake control means is settable by the driver. In this description and the subsequent claims, this target speed is referred to as "brake reference speed". In dependence on information as to the set brake reference speed and the actual speed of the vehicle, the brake control means will endeavour to restrict the speed of the vehicle to the brake reference speed. Such a brake control means is normally adapted to control one or several auxiliary brakes of the vehicle. An auxiliary brake is a supplement to the ordinary wheel brakes of the vehicle and is configured to produce a retarding torque for decreasing the rotational speed of the engine crankshaft. An auxiliary brake may for instance be an engine brake, an exhaust brake, an electromagnetic retarder or a hydraulic retarder. The auxiliary brakes are with advantage used for constant speed keeping purposes in downhill slopes and for moderate decelerations, whereas the vehicle's ordinary wheel brakes are mainly used for powerful and sudden braking operations. With the use of auxiliary brakes, the ordinary wheel brakes, which normally constitute friction brakes of disc brake or drum brake type, are prevented from overheating with the associated risk of brake failure and the wear thereof is reduced.

US 5 634 446 A discloses a cruise control system provided with brake control means which controls auxiliary brakes of a vehicle in order to restrict the speed of the vehicle to a given brake reference speed when the vehicle accelerates under the effect of gravity in a downhill slope to a speed above the ordinary target speed set for the cruise control system.

EP 1 013 520 A1 discloses a method for controlling the mode of travel of a motor vehicle, with a cruise controller and an automatic downhill braking controller or with a cruise controller and an anti-collision controller. Under certain circumstances, during downhill gradients, the vehicle speed is allowed to exceed the desired speed (vₛₒₗₗ).

### DISCLOSURE OF THE INVENTION

The object of the present invention is to propose a new and advantageous manner of regulating the target speed of a cruise control system of a motor vehicle.

According to the invention, this object is achieved by a method having the features defined in claim 1 and a cruise control system having the features defined in claim 11.

According to the invention:
- the target speed for the engine control means is set to a basic value that is adjustable by the driver of the vehicle; and
- the target speed is automatically and temporarily increased from the basic value to a modified value when it is established that the following conditions are fulfilled:
   - it is detected that the vehicle is descending a downhill slope, and
   - the driving resistance of the vehicle is positive.

The invention is based on the realization that an acceleration of a vehicle can be achieved in a fuel-efficient manner when the vehicle is descending a downhill slope which is so gently sloping that the driving resistance of the vehicle prevents the vehicle from accelerating purely under the effect of gravity. In such a situation, an acceleration of the vehicle may be achieved by injecting comparatively small amounts of fuel into the cylinders of the vehicle engine. The increase of the target speed from the basic value to the modified value will allow the vehicle to temporarily accelerate to and travel at a speed above the speed corresponding to the basic value set by the driver for the target speed. The vehicle may benefit from this higher speed if it encounters an uphill slope before the target speed has been reset from the modified value to the basic value, since an additional speed when entering an uphill slope will reduce the time and fuel required for ascending the uphill slope. In this manner, the vehicle may take advantage of the fuel-efficient speed increase in a downhill slope when ascending an uphill slope following shortly after the downhill slope. This will create opportunities for improved fuel economy and a higher mean speed of the vehicle.

According to an embodiment of the invention:
- the cruise control system comprises brake control means adapted to automatically control one or several brakes of the vehicle so as to endeavour to restrict the speed of the vehicle to a brake reference speed when the vehicle descends a downhill slope, the brake reference speed being set to a value higher than the basic value for the target speed; and
- a maximum allowed upper level for the target speed is established in dependence on the brake reference speed.

The maximum allowed upper level for the target speed is suitably set to correspond to the value of the brake reference speed minus a given offset value, which for instance is in the order of 0.5-2 km/h.

Hereby, the target speed will be prevented from being increased to close to the brake reference speed, which could cause conflicts between the engine control means and the brake control means.

Further advantageous features of the method and the cruise control system according to the invention are indicated in the dependent claims and the following description.

The invention also relates to a computer program having the features defined in claim 16, a computer program product having the features defined in claim 17 and an electronic control unit having the features defined in claim 18.

### BRIEF DESCRIPTION OF THE DRAWINGS

With reference to the appended drawings, a specific description of embodiments of the invention cited as examples follows below. In the drawings:
- Fig 1: is a schematic diagram of a combustion engine with an associated driveline, illustrating an embodiment of a cruise control system according to the present invention,
- Fig 2: is a schematic outline diagram of an electronic control unit for implementing a method according to the invention, and
- Fig 3: is a flow diagram illustrating a method according to an embodiment of the invention.

### MODES FOR CARRYING OUT THE INVENTION

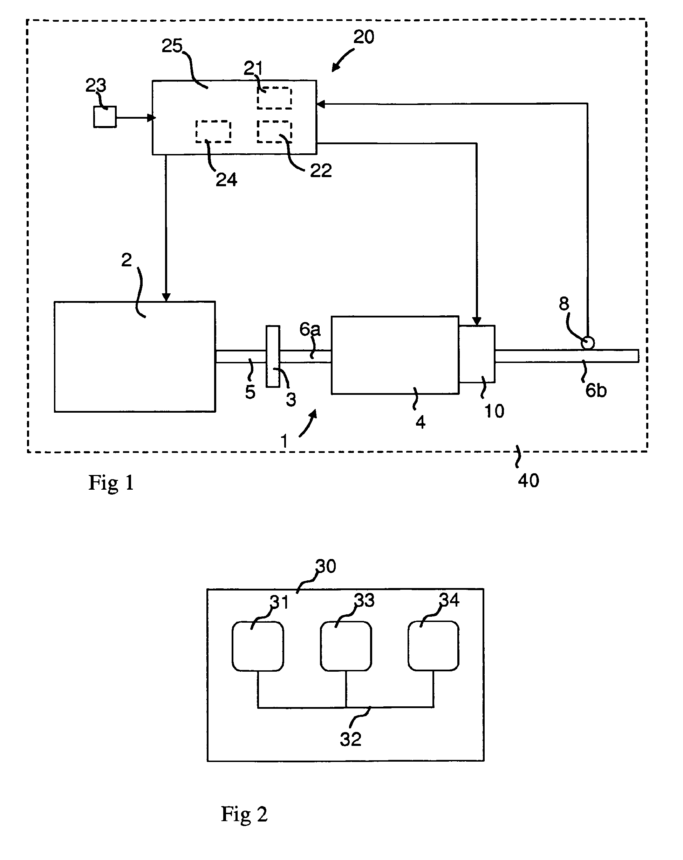

A part of a drive line 1 of a motor vehicle 40 is schematically illustrated in Fig 1. The drive line 1 comprises a vehicle engine 2, for instance in the form of a conventional combustion engine, which is connected to driving wheels (not shown) of the vehicle via a clutch 3 and a gearbox 4. The output shaft 5 of the engine 1 is connected to the input shaft 6a of the gearbox via said clutch 3, which is arranged to transfer the torque exerted by the engine to the input shaft 6a of the gearbox.

The vehicle is provided with a cruise control system 20, which comprises engine control means 21 adapted to automatically control the engine 2 in dependence on information as to a target speed Sₜ and the actual speed of the vehicle so as to endeavour to keep the speed of the vehicle essentially equal to the target speed Sₜ. The cruise control system 20 may further comprise brake control means 22 adapted to automatically control one or several brakes of the vehicle so as to endeavour to restrict the speed of the vehicle to a brake reference speed S_{ref} when the vehicle descends a downhill slope and the vehicle has been accelerated under the effect of gravity to a speed above the target speed Sₜ. Thus, when the cruise control system operates with the engine control means 21 and the brake control means 22 enabled, i.e. with the engine control means and the brake control means in operational state, the target speed Sₜ constitutes a lower speed limit for the vehicle speed whereas the brake reference speed S_{ref} constitutes an upper speed limit for the vehicle speed. If the driving resistance of the vehicle is positive, the engine control means 21 controls the engine 2 so as to strive to keep the speed of the vehicle essentially equal to the target speed Sₜ. Thus, the engine control means 21 will increase the engine power when the speed of the vehicle falls below the target speed Sₜ and reduce the engine power when the speed of the vehicle increases above the target speed. If the driving resistance of the vehicle is negative, the brake control means 22 controls one or several brakes of the vehicle so as to strive to restrict the speed of the vehicle to the brake reference speed S_{ref}. Thus, the brake control means 22 will increase the braking power when the speed of the vehicle increases above the brake reference speed S_{ref} and reduce the braking power when the speed of the vehicle falls below the brake reference speed.

If the vehicle descends a downhill slope with the engine control means 21 and the brake control means 22 enabled, the brake control means 22 will initiate a braking operation so as to endeavour to restrict the speed of the vehicle to the brake reference speed S_{ref} when the vehicle under the effect of gravity has been accelerated to a speed above the target speed Sₜ and reached the brake reference speed S_{ref}.

The brake control means 22 may be adapted to control one or several auxiliary brakes of the vehicle, such as an engine brake and/or an exhaust brake and/or an electromagnetic retarder and/or a hydraulic retarder. In the illustrated example, the brake control means 22 is adapted to control an auxiliary brake 10 in the form of a retarder, which acts on the output shaft 6b of the gearbox 4.

The cruise control system 20 further comprises speed setting means 23, by means of which the driver of the vehicle may set the target speed Sₜ to a desired basic value V_{bas}. The speed setting means 23 may be configured to allow the driver to set the brake reference speed S_{ref} as a desired offset from the basic value V_{bas} for the target speed Sₜ. The speed setting means 23 may also be configured to allow the driver to directly set a desired value for the brake reference speed S_{ref}. It is realized that the brake reference speed S_{ref} always should be set higher than the target speed Sₜ in order to avoid conflicts between the engine control means 21 and the brake control means 22.

The inventive cruise control system 20 comprises processing means 24 adapted to automatically and temporarily increase the target speed Sₜ from the basic value V_{bas} to a modified value V_{mod} when it has established that the following conditions are simultaneously fulfilled:
- it is detected that the vehicle is descending a downhill slope, and
- the driving resistance of the vehicle is positive.

The driving resistance of the vehicle may be established by means of a suitable calculation model based on different parameters of the vehicle, such as engine load, engine rotational speed and vehicle speed, in a manner well-known to a person skilled in the art. That the driving resistance is positive implies that the vehicle will be retarded if no engine power is ordered by the engine control means 21.

That the vehicle is descending a downhill slope may for instance be detected based on measuring values from an inclination sensor or by means of a suitable calculation model based on different parameters of the vehicle, such as engine load, engine rotational speed and vehicle speed, in a manner well-known to a person skilled in the art.

That the vehicle is descending a downhill slope may in addition or as an alternative be detected by means of information as to the change in altitude of the vehicle. The change in altitude of the vehicle may be established based on a comparison of consecutive altitude values representing the instantaneous altitude of the vehicle at different moments during the travel of the vehicle. Such altitude values may for instance be established by means of GPS (GPS = Global Positioning System) and/or a barometric altimeter.

The processing means 24 is with advantage adapted to increase the magnitude of the target speed Sₜ gradually as long as the above-mentioned conditions remain fulfilled, up to a maximum allowed upper level Vₘₐₓ. The processing means 24 is preferably adapted to perform said gradual increase of the magnitude of the target speed Sₜ with steps of a given magnitude at certain time intervals. The magnitude of each steps may be in the order of 0.05-0.5 km/h, for instance 0.1 km/h, and the time interval between each step may be in the order of 1-5 seconds, for instance 1.5 seconds.

As an alternative, the processing means 24 may be adapted to increase the magnitude of the target speed Sₜ from the basic value V_{bas} to the modified value V_{mod} in one single step, which for instance may correspond to a speed increase in the order of about 5 km/h.

When the cruise control system 20 operates with the brake control means 22 disabled, the processing means 24 may be adapted to establish said maximum allowed upper level Vₘₐₓ for The target speed Sₜ in dependence on the basic value V_{bas}. In this case, the processing means 24 may be adapted to set the maximum allowed upper level Vₘₐₓ for the target speed Sₜ to correspond to the basic value V_{bas} plus a given offset value. The offset value may be of a given magnitude which is adjustable by the driver or fixed, for instance in the order of 5-15 km/h. The magnitude of the offset value may alternatively be established in dependence on the basic value V_{bas}.

When the cruise control system 20 operates with the brake control means 22 enabled, the processing means 24 is with advantage adapted to establish said maximum allowed upper level Vₘₐₓ for the target speed Sₜ in dependence on the brake reference speed S_{ref}. The maximum allowed upper level Vₘₐₓ for the target speed Sₜ is to be lower than the brake reference speed S_{ref} in order to avoid conflicts between the engine control means 21 and the brake control means 22. In this case, the processing means 24 may be adapted to set the maximum allowed upper level Vₘₐₓ for the target speed Sₜ to correspond to the value of the brake reference speed S_{ref} minus a given offset value, which for instance is in the order of 0.5-2 km/h.

If the vehicle is provided with a top speed limiter adapted to prevent the vehicle engine 2 from accelerating the vehicle to a speed above a pre-set speed limit, this pre-set speed limit may with advantage constitute an upper limit for the target speed Sₜ.

After an increase of the target speed Sₜ from the basic value V_{bas} to the modified value V_{mod}, the processing means 24 may be adapted to reset the target speed Sₜ to the basic value V_{bas} when it is established that the following conditions are simultaneously fulfilled:
- the driving resistance of the vehicle is lower than a given driving resistance threshold value T_{dr1}, for instance corresponding to about 100 N, and
- the acceleration of the vehicle is higher than a given acceleration threshold value Tₐ, for instance corresponding to about 5 rpm/s.

Hereby, the target speed Sₜ will be reset to the basic value V_{bas} if the gently sloping part of the downhill slope descended by the vehicle is followed by a steeper part or a new steep downhill slope before the target speed Sₜ has been reset to the basic value V_{bas}. Other alternative conditions for a reset of the target speed Sₜ to the basic value V_{bas} may also be contemplated. The principal thing is that the target speed should be reset to the basic value V_{bas} when it is detected that the vehicle has entered a downhill slope of certain steepness.

When it is established that the driving resistance of the vehicle has been increased above a given driving resistance threshold value T_{dr2} (here denominated upper threshold value) after an increase of the target speed Sₜ to the modified value V_{mod}, the processing means 24 may be adapted to lower the target speed Sₜ from the modified value V_{mod} to a value essentially corresponding to the speed at which the vehicle was running when it was established that the driving resistance of the vehicle had been increased above this upper threshold value T_{dr2}. The magnitude of this upper threshold value T_{dr2} may depend on the prevailing total weight of the vehicle, i.e. the weight of the vehicle itself plus the weight of the load carried or towed by the vehicle. Hereby, the target speed Sₜ will be lowered from the modified value V_{mod} if the gently sloping downhill slope descended by the vehicle is followed by a steep uphill slope before the target speed Sₜ has been reset to the basic value V_{bas}.

Furthermore, after an increase of the target speed Sₜ from the basic value V_{bas} to the modified value V_{mod}, the processing means 24 is suitably adapted to decrease the target speed Sₜ towards the basic value V_{bas} when a certain period of time has lapsed from the moment of said increase of the target speed Sₜ. This decrease of the reference speed S_{ref} from the modified value V_{mod} towards the basic value V_{bas} is with advantage performed gradually, for instance with steps of a given magnitude at certain time intervals. The magnitude of said steps may for instance be about 0.1 km/h and the time interval between each step may for instance be about 0.5 seconds. This decrease of the target speed Sₜ towards the basic value V_{bas} is interrupted when the target speed Sₜ has reached the basic value V_{bas}.

If the basic value V_{bas} for the target speed Sₜ is below a certain speed, for instance about 60 km/h, the target speed Sₜ is with advantage restricted to the basic value V_{bas}, which implies that no increase of the target speed Sₜ from the basic value V_{bas} to the modified value V_{mod} is allowed in this situation.

The engine control means 21, the brake control means 22 and the processing means 24 may be integrated in one and the same electronic control unit 25, as illustrated in Fig 1, but may alternatively be arranged in separate and mutually communicating electronic control units.

The actual speed of the vehicle, i.e. the prevailing speed at which the vehicle is running, may be measured or estimated in any suitable manner. The speed of the vehicle may for instance be estimated based on measuring values of the rotational speed of some part of the vehicle's drive shaft, such as the output shaft 6b of the gearbox 4. In the example illustrated in Fig 1, the actual vehicle speed is established by means of a measuring member 8 arranged to generate a value representing the rotational speed of the gearbox output shaft 6b. The cruise control system 20 is arranged to receive information from this measuring member 8.

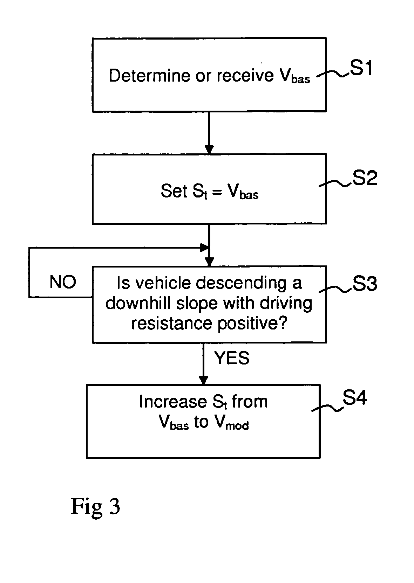

A flow diagram illustrating an embodiment of an inventive method for controlling the target speed Sₜ of a cruise control system 20 of a motor vehicle is shown in Fig 3. In a first step S1, a basic value V_{bas} for the target speed Sₜ is determined or received. In a second step S2, the target speed Sₜ is set to the basic value V_{bas}. In a third step S3, it is established whether or not the vehicle is descending a downhill slope with the driving resistance of the vehicle being positive. If this is not the case, step S3 is repeated after a certain time interval. If this is the case, the target speed Sₜ is increased from the basic value V_{bas} to the modified value V_{mod} in step S4.

Computer program code for implementing a method according to the invention is suitably included in a computer program, which is loadable into the internal memory of a computer, such as the internal memory of an electronic control unit of a motor vehicle. Such a computer program is suitably provided via a computer program product comprising a data storage medium readable by an electronic control unit, which data storage medium has the computer program stored thereon.

A computer program according to an embodiment of the invention comprises computer program code for causing a computer:
- to determine or receive a basic value V_{bas} for a target speed Sₜ;
- to determine or receive a value representing the actual speed of a vehicle;
- to control the engine of the vehicle in dependence on information as to the target speed Sₜ and the actual speed of the vehicle so as to endeavour to keep the speed of the vehicle essentially equal to the target speed Sₜ; and
- to automatically and temporarily increase said target speed Sₜ from the basic value V_{bas} to a modified value V_{mod} when it is established that the following conditions are fulfilled:
   - it is detected that the vehicle is descending a downhill slope, and
   - the driving resistance of the vehicle is positive.

Fig 2 very schematically illustrates an electronic control unit 30 comprising an execution means 31, such as a central processing unit (CPU), for executing computer software. The execution means 31 communicates with a memory 33, for instance of the type RAM, via a data bus 32. The control unit 30 also comprises data storage medium 34, for instance in the form of a hard disc, a Flash memory or a memory of the type ROM, PROM, EPROM or EEPROM. The execution means 31 communicates with the data storage medium 34 via the data bus 32. A computer program comprising computer program code for implementing a method according to the invention is stored on the data storage medium 34.

The invention is of course not in any way restricted to the embodiments described above. On the contrary, many possibilities to modifications thereof will be apparent to a person with ordinary skill in the art without departing from the basic idea of the invention as defined in the appended claims.

## Claims

1. A method for controlling the target speed (Sₜ) of a cruise control system (20) of a motor vehicle, wherein the cruise control system comprises engine control means (21) adapted to automatically control the engine of the vehicle in dependence on information as to the target speed and the actual speed of the vehicle so as to endeavour to keep the speed of the vehicle essentially equal to the target speed, the target speed being set to a basic value that is adjustable by the driver of the vehicle,
**characterized in that** the target speed is automatically and temporarily increased from the basic value to a modified value when it is established that the following conditions are fulfilled:
- it is detected that the vehicle is descending a downhill slope, and
- the driving resistance of the vehicle is positive.

2. A method according to claim 1, **characterized in that** the magnitude of the target speed is gradually increased as long as said conditions remain fulfilled, up to a maximum allowed upper level.

3. A method according to claim 2, **characterized in that** said gradual increase of the magnitude of the target speed is performed with steps of a given magnitude at certain time intervals.

4. A method according to claim 3, **characterized in that** the magnitude of each steps is in the order of 0.05-0.5 km/h, for instance 0.1 km/h, and that the time interval between each step is in the order of 1-5 seconds, for instance 1.5 seconds.

5. A method according to any of claims 1-4, **characterized in:**
- **that** the cruise control system comprises brake control means (22) adapted to automatically control one or several brakes of the vehicle so as to endeavour to restrict the speed of the vehicle to a brake reference speed when the vehicle descends a downhill slope, the brake reference speed being set to a value higher than the basic value for the target speed; and
- **that** a maximum allowed upper level for the target speed is established in dependence on the brake reference speed.

6. A method according to claim 5, **characterized in that** the maximum allowed upper level for the target speed is set to correspond to the value of the brake reference speed minus a given offset value, which for instance is in the order of 0.5-2 km/h.

7. A method according to any of claims 1-6, **characterized in that** the target speed, after an increase thereof to the modified value, is reset to the basic value when it is established that the following conditions are fulfilled:
- the driving resistance of the vehicle is lower than a given lower threshold value, and
- the acceleration of the vehicle is higher than a given acceleration threshold value.

8. A method according to any of claims 1-7, **characterized in that**, when it is established that the driving resistance of the vehicle has been increased above a given upper threshold value after an increase of the target speed to the modified value, the target speed is lowered from the modified value to a value essentially corresponding to the speed at which the vehicle was running when it was established that the driving resistance of the vehicle had been increased above this upper threshold value.

9. A method according to any of claims 1-8, **characterized in that** the target speed, after an increase thereof to the modified value, is decreased towards the basic value when a certain period of time has lapsed from the moment of said increase of the target speed.

10. A method according to claim 9, **characterized in that** said decrease of the reference speed from the modified value towards the basic value is performed gradually.

11. A cruise control system for controlling the speed of a motor vehicle, wherein the cruise control system (20) comprises:
- engine control means (21) adapted to automatically control the engine in dependence on information as to a target speed and the actual speed of the vehicle so as to endeavour to keep the speed of the vehicle essentially equal to the target speed; and
- speed setting means (23), by means of which the driver of the vehicle may set the target speed to a desired basic value, **characterized in that** the cruise control system (20) comprises processing means (24) adapted to automatically and temporarily increase the target speed from the basic value to a modified value when it has established that the following conditions are fulfilled:
- it is detected that the vehicle is descending a downhill slope, and
- the driving resistance of the vehicle is positive.

12. A cruise control system according to claim 11, **characterized in that** the processing means (24) is adapted to increase the magnitude of the target speed gradually as long as said conditions remain fulfilled, up to a maximum allowed upper level.

13. A cruise control system according to claim 12, **characterized in that** the processing means (24) is adapted to perform said gradual increase of the magnitude of the target speed with steps of a given magnitude at certain time intervals.

14. A cruise control system according to any of claims 11-13, **characterized in:**
- **that** the cruise control system comprises brake control means (22) adapted to automatically control one or several brakes of the vehicle so as to endeavour to restrict the speed of the vehicle to a brake reference speed when the vehicle descends a downhill slope, the brake reference speed being set to a value higher than the basic value for the target speed; and
- **that** the processing means (24) is adapted to establish a maximum allowed upper level for the target speed in dependence on the brake reference speed.

15. A cruise control system according to claim 14, **characterized in that** the processing means (24) is adapted to set the maximum allowed upper level for the target speed to correspond to the value of the brake reference speed minus a given offset value, which for instance is in the order of 0.5-2 km/h.

16. A computer program loadable into the internal memory of a computer in a motor vehicle, the computer program comprising computer program code for causing the computer:
- to determine or receive a basic value for a target speed;
- to determine or receive a value representing the actual speed of the vehicle;
- to control the engine of the vehicle in dependence on information as to the target speed and the actual speed of the vehicle so as to endeavour to keep the speed of the vehicle essentially equal to the target speed; and
- to automatically and temporarily increase said target speed from the basic value to a modified value when it is established that the following conditions are fulfilled:
• it is detected that the vehicle is descending a downhill slope, and
• the driving resistance of the vehicle is positive.

17. A computer program product comprising a data storage medium readable by an electronic control unit (30), a computer program according to claim 16 being stored on said data storage medium.

18. An electronic control unit (30) comprising an execution means (31), a memory (33) connected to the execution means and a data storage medium (34) connected to the execution means, wherein a computer program according to claim 16 is stored on said data storage medium (34).

## Patentansprüche

1. Verfahren zum Regeln der Sollgeschwindigkeit (Sₜ) eines Fahrgeschwindigkeitsregelungssystems (20) eines Kraftfahrzeugs, wobei das Fahrgeschwindigkeitsregelungssystem ein Motorregelungsmittel (21) umfasst, welches dazu eingerichtet ist, automatisch den Motor des Fahrzeugs in Abhängigkeit von die Sollgeschwindigkeit und die Istgeschwindigkeit des Fahrzeugs betreffenden Informationen zu regeln, um zu erreichen, dass die Geschwindigkeit des Fahrzeugs im Wesentlichen gleich der Sollgeschwindigkeit gehalten wird, wobei die Sollgeschwindigkeit auf einen durch den Fahrer des Fahrzeugs anpassbaren Basiswert gesetzt ist,
**dadurch gekennzeichnet, dass** die Sollgeschwindigkeit automatisch und vorübergehend von dem Basiswert auf einen geänderten Wert angehoben wird, wenn festgestellt wird, dass die folgenden Bedingungen erfüllt sind:
- es wird erfasst, dass das Fahrzeug ein Gefälle hinab fährt, und
- die Fahrwiderstände des Fahrzeugs positiv sind.

2. Verfahren nach Anspruch 1,
**dadurch gekennzeichnet, dass** der Betrag der Sollgeschwindigkeit stufenweise, solange die genannten Bedingungen erfüllt bleiben, bis zu einem höchsten erlaubten oberen Grenzwert angehoben wird.

3. Verfahren nach Anspruch 2,
**dadurch gekennzeichnet, dass** das genannte stufenweise Anheben des Betrags der Sollgeschwindigkeit in Schritten mit gegebener Schrittweite zu bestimmten Zeitintervallen durchgeführt wird.

4. Verfahren nach Anspruch 3,
**dadurch gekennzeichnet, dass** die Schrittweite eines jeden Schrittes in der Größenordnung von 0,05 - 0,5 km/h, beispielsweise bei 0,1 km/h liegt, und dass das Zeitintervall zwischen jedem Schritt in der Größenordnung von 1 - 5 Sekunden, beispielsweise bei 1,5 Sekunden liegt.

5. Verfahren nach einem der Ansprüche 1 bis 4,
**dadurch gekennzeichnet:**
- **dass** das Fahrgeschwindigkeitsregelungssystem ein Bremsregelungsmittel (22) umfasst, welches dazu eingerichtet ist, automatisch eine oder mehrere Bremsen des Fahrzeugs zu regeln, um zu erreichen, dass dann, wenn das Fahrzeug ein Gefälle hinab fährt, die Geschwindigkeit des Fahrzeugs auf eine Referenz-Bremsgeschwindigkeit beschränkt wird, wobei die Referenz-Bremsgeschwindigkeit auf einen höheren Wert als den Basiswert der Sollgeschwindigkeit festgesetzt wird; und
- **dass** ein höchster erlaubter oberer Grenzwert für die Sollgeschwindigkeit in Abhängigkeit von der Referenz-Bremsgeschwindigkeit eingeführt wird.

6. Verfahren nach Anspruch 5,
**dadurch gekennzeichnet, dass** der höchste erlaubte Grenzwert für die Sollgeschwindigkeit so festgesetzt wird, dass er dem Wert der Referenz-Bremsgeschwindigkeit minus einem gegebenen Differenzbetrag entspricht, welcher beispielsweise in der Größenordnung von 0,5 - 2 km/h liegt.

7. Verfahren nach einem der Ansprüche 1 bis 6,
**dadurch gekennzeichnet, dass** die Sollgeschwindigkeit, nachdem diese auf den geänderten Wert angehoben wurde, auf den Basiswert zurückgesetzt wird, wenn festgestellt wird, dass die folgenden Bedingungen erfüllt sind:
- die Fahrwiderstände des Fahrzeugs sind geringer als ein gegebener unterer Schwellwert, und
- die Beschleunigung des Fahrzeugs ist größer als ein gegebener Beschleunigungs-Schwellwert.

8. Verfahren nach einem der Ansprüche 1 bis 7,
**dadurch gekennzeichnet, dass** dann, wenn nach einer Erhöhung der Sollgeschwindigkeit auf einen geänderten Wert festgestellt wird, dass die Fahrwiderstände des Fahrzeugs über einen gegebenen oberen Schwellwert angestiegen sind, die Sollgeschwindigkeit von dem geänderten Wert auf einen Wert abgesenkt wird, welcher im Wesentlichen der Geschwindigkeit entspricht, mit welcher das Fahrzeug gefahren ist, als ermittelt wurde dass die Fahrwiderstände des Fahrzeugs über diesen oberen Schwellwert angestiegen sind.

9. Verfahren nach einem der Ansprüche 1 bis 8,
**dadurch gekennzeichnet, dass** nach einem Anheben der Sollgeschwindigkeit auf den geänderten Wert, die Sollgeschwindigkeit auf den Basiswert abgesenkt wird, wenn eine gewisse Dauer seit dem Moment dieses Anstieges der Sollgeschwindigkeit verstrichen ist.

10. Verfahren nach Anspruch 9,
**dadurch gekennzeichnet, dass** diese Abnahme der Referenzgeschwindigkeit von dem geänderten Wert auf den Basiswert stufenweise erfolgt.

11. Fahrgeschwindigkeitsregelungssystem zum Regeln der Geschwindigkeit eines Kraftfahrzeugs, wobei das Fahrgeschwindigkeitsregelungssystem (20) umfasst:
- ein Motorregelungsmittel (21), welches dazu eingerichtet ist, automatisch den Motor in Abhängigkeit von die Sollgeschwindigkeit und die Istgeschwindigkeit des Fahrzeugs betreffenden Informationen zu regeln, um zu erreichen, dass die Geschwindigkeit des Fahrzeugs im Wesentlichen gleich der Sollgeschwindigkeit gehalten wird; und
- ein Geschwindigkeitsfestsetzungsmittel (23), mittels welchem der Fahrer des Fahrzeugs die Sollgeschwindigkeit auf einen gewünschten Basiswert festlegen kann, **dadurch gekennzeichnet, dass** das Fahrgeschwindigkeitsregelungssystem (20) ein Berechnungsmittel (24) umfasst, welches dazu eingerichtet ist, automatisch und vorübergehend die Sollgeschwindigkeit von einem Basiswert auf einen geänderten Wert anzuheben, wenn festgestellt wird, dass die folgenden Bedingungen erfüllt sind:
- es wird erfasst, dass das Fahrzeug ein Gefälle hinab fährt, und
- die Fahrwiderstände des Fahrzeugs positiv sind.

12. Fahrgeschwindigkeitsregelungssystem nach Anspruch 11,
**dadurch gekennzeichnet, dass** das Berechnungsmittel (24) dazu eingerichtet ist, den Betrag der Sollgeschwindigkeit stufenweise, solange die genannten Bedingungen erfüllt bleiben, bis zu einem höchsten erlaubten oberen Grenzwert anzuheben.

13. Fahrgeschwindigkeitsregelungssystem nach Anspruch 12,
**dadurch gekennzeichnet, dass** das Berechnungsmittel (24) dazu eingerichtet ist, das stufenweise Anheben des Betrags der Sollgeschwindigkeit in Schritten mit gegebener Schrittweite zu bestimmten Zeitintervallen durchzuführen.

14. Fahrgeschwindigkeitsregelungssystem nach einem der Ansprüche 11 bis 13,
**dadurch gekennzeichnet:**
- **dass** das Fahrgeschwindigkeitsregelungssystem ein Bremsregelungsmittel (22) umfasst, welches dazu eingerichtet ist, automatisch eine oder mehrere Bremsen des Fahrzeugs zu regeln, um zu erreichen, dass die Geschwindigkeit des Fahrzeugs auf eine Referenz-Bremsgeschwindigkeit beschränkt wird, wenn das Fahrzeug ein Gefälle hinab fährt, wobei die Referenz-Bremsgeschwindigkeit auf einen höheren Wert als den Basiswert der Sollgeschwindigkeit festgesetzt wird; und
- **dass** das Berechnungsmittel (24) dazu eingerichtet ist, einen höchsten erlaubten oberen Grenzwert für die Sollgeschwindigkeit in Abhängigkeit von der Referenz-Bremsgeschwindigkeit festzulegen.

15. Fahrgeschwindigkeitsregelungssystem nach Anspruch 14,
**dadurch gekennzeichnet, dass** das Berechnungsmittel (24) dazu eingerichtet ist, den höchsten erlaubten oberen Grenzwert für die Sollgeschwindigkeit auf einen Wert entsprechend der Referenz-Bremsgeschwindigkeit minus einem gegebenen Differenzbetrag festzulegen, welcher beispielsweise in der Größenordnung von 0,5 bis 2 km/h liegt.

16. Computerprogramm, welches in den internen Speicher des Computers eines Kraftfahrzeugs geladen werden kann und welches einen Computerprogrammcode umfasst, welcher den Computer veranlasst:
- einen Basiswert für eine Sollgeschwindigkeit festzulegen oder zu empfangen;
- einen der Istgeschwindigkeit des Fahrzeugs entsprechenden Wert festzulegen oder zu empfangen;
- den Motor des Fahrzeugs in Abhängigkeit von die Sollgeschwindigkeit und die Istgeschwindigkeit des Fahrzeugs betreffenden Informationen zu steuern, um zu erreichen, dass die Geschwindigkeit des Fahrzeugs im Wesentlichen gleich der Sollgeschwindigkeit gehalten wird;
- die Sollgeschwindigkeit automatisch und vorübergehend von einem Basiswert auf einen geänderten Wert anzuheben, wenn festgestellt wird, dass die folgenden Bedingungen erfüllt sind:
- es wird festgestellt, dass das Fahrzeug ein Gefälle hinab fährt, und
- die Fahrwiderstände des Fahrzeugs positiv sind.

17. Computerprogrammprodukt, welches ein von einer elektronischen Steuereinheit (30) lesbares Datenspeichermedium und ein auf dem Datenspeichermedium gespeichertes Computerprogramm nach Anspruch 16 umfasst.

18. Elektrische Steuereinheit (30), welche ein Ausführungsmittel (31), einen mit dem Ausführungsmittel verbundenen Speicher (33) sowie ein mit dem Ausführungsmittel verbundenes Datenspeichermedium (34) umfasst, wobei auf dem Datenspeichermedium (34) ein Computerprogramm nach Anspruch 16 gespeichert ist.

## Revendications

1. Procédé pour commander la vitesse cible (Sₜ) d'un système de commande de vitesse programmée (20) d'un véhicule à moteur, dans lequel le système de commande de vitesse programmée comprend des moyens de commande de moteur (21) adaptés de façon à commander automatiquement le moteur du véhicule en fonction d'une information concernant la vitesse cible et la vitesse réelle du véhicule de façon à tenter de maintenir la vitesse du véhicule essentiellement égale à la vitesse cible, la vitesse cible étant établie à une valeur de base qui est réglable par le conducteur du véhicule,
**caractérisé en ce que** la vitesse cible est augmentée automatiquement et temporairement de la valeur de base à une valeur modifiée lorsqu'il est établi que les conditions suivantes sont remplies :
- il est détecté que le véhicule descend une pente descendante, et
- la résistance à l'avancement du véhicule est positive.

2. Procédé selon la revendication 1, **caractérisé en ce que** la valeur de la vitesse cible est graduellement augmentée tant que lesdites conditions restent remplies, jusqu'à un niveau supérieur maximal autorisé.

3. Procédé selon la revendication 2, **caractérisé en ce que** ladite augmentation graduelle de la valeur de la vitesse cible est effectuée par étapes avec une amplitude donnée à certains intervalles de temps.

4. Procédé selon la revendication 3, **caractérisé en ce que** l'amplitude à chaque étape est de l'ordre de 0,05 à 0,5 km/h, par exemple de 0,1 km/h, et **en ce que** l'intervalle de temps entre chaque étape est de l'ordre de 1 à 5 secondes, par exemple de 1,5 seconde.

5. Procédé selon l'une quelconque des revendications 1 à 4, **caractérisé en ce que** :
- le système de commande de vitesse programmée comprend des moyens de commande de freins (22) adaptés de façon à commander automatiquement un ou plusieurs freins du véhicule de façon à tenter de restreindre la vitesse du véhicule à une vitesse de référence de frein lorsque le véhicule descend une pente descendante, la vitesse de référence de frein étant établie à une valeur supérieure à la valeur de base pour la vitesse cible ; et
- un niveau supérieur maximal autorisé pour la vitesse cible est établi en fonction de la vitesse de référence de frein.

6. Procédé selon la revendication 5, **caractérisé en ce que** le niveau supérieur maximal autorisé pour la vitesse cible est établi de façon à correspondre à la valeur de la vitesse de référence de frein moins une valeur de décalage donnée, qui est par exemple de l'ordre de 0,5 à 2 km/h.

7. Procédé selon l'une quelconque des revendications 1 à 6, **caractérisé en ce que** la vitesse cible, après une augmentation de celle-ci à la valeur modifiée, est rétablie à la valeur de base lorsqu'il est établi que les conditions suivantes sont remplies :
- la résistance à l'avancement du véhicule est inférieure à une valeur de seuil inférieure donnée, et
- l'accélération du véhicule est supérieure à une valeur de seuil d'accélération donnée.

8. Procédé selon l'une quelconque des revendications 1 à 7, **caractérisé en ce que**, lorsqu'il est établi que la résistance à l'avancement du véhicule a été augmentée au-dessus d'une valeur de seuil supérieure donnée après une augmentation de la vitesse cible à la valeur modifiée, la vitesse cible est diminuée de la valeur modifiée à une valeur correspondant essentiellement à la vitesse à laquelle le véhicule circulait lorsqu'il a été établi que la résistance à l'avancement du véhicule a été augmentée au-dessus de sa valeur de seuil supérieure.

9. Procédé selon l'une quelconque des revendications 1 à 8, **caractérisé en ce que** la vitesse cible, après une augmentation de celle-ci à la valeur modifiée, est diminuée vers la valeur de base lorsqu'une certaine période de temps s'est écoulée à partir du moment de ladite augmentation de la vitesse cible.

10. Procédé selon la revendication 9, **caractérisé en ce que** ladite diminution de la vitesse de référence à partir de la valeur modifiée vers la valeur de base est effectuée graduellement.

11. Système de commande de vitesse programmée pour commander la vitesse d'un véhicule à moteur, dans lequel le système de commande de vitesse programmée (20) comprend :
- des moyens de commande de moteur (21) adaptés de façon à commander automatiquement le moteur en fonction d'une information concernant une vitesse cible et la vitesse réelle du véhicule de façon à tenter de maintenir la vitesse du véhicule essentiellement égale à la vitesse cible ; et
- des moyens d'établissement de vitesse (23), à l'aide desquels le conducteur du véhicule peut établir la vitesse cible à une valeur de base désirée,
**caractérisé en ce que** le système de commande de vitesse programmée (20) comprend des moyens de traitement (24) adaptés de façon à augmenter automatiquement et temporairement la vitesse cible de la valeur de base à une valeur modifiée lorsqu'il a été établi que les conditions suivantes sont remplies :
- il est détecté que le véhicule descend une pente descendante, et
- la résistance à l'avancement du véhicule est positive.

12. Système de commande de vitesse programmée selon la revendication 11, **caractérisé en ce que** les moyens de traitement (24) sont adaptés de façon à augmenter graduellement la valeur de la vitesse cible tant que lesdites conditions restent remplies, jusqu'à un niveau supérieur maximal autorisé.

13. Système de commande de vitesse programmée selon la revendication 12, **caractérisé en ce que** les moyens de traitement (24) sont adaptés de façon à effectuer ladite augmentation graduelle de la valeur de la vitesse cible par étapes avec une amplitude donnée à certains intervalles de temps.

14. Système de commande de vitesse programmée selon l'une quelconque des revendications 11 à 13, **caractérisé en ce que** :
- le système de commande de vitesse programmée comprend des moyens de commande de freins (22) adaptés de façon à commander automatiquement un ou plusieurs freins du véhicule de façon à tenter de restreindre la vitesse du véhicule à une vitesse de référence de frein lorsque le véhicule descend une pente descendante, la vitesse de référence de frein étant établie à une valeur supérieure à la valeur de base pour la vitesse cible ; et
- les moyens de traitement (24) sont adaptés de façon à établir un niveau supérieur maximal autorisé pour la vitesse cible en fonction de la vitesse de référence de frein.

15. Système de commande de vitesse programmée selon la revendication 14, **caractérisé en ce que** les moyens de traitement (24) sont adaptés de façon à établir le niveau supérieur maximal autorisé pour la vitesse cible de façon à correspondre à la valeur de la vitesse de référence de frein moins une valeur de décalage donnée, qui est par exemple de l'ordre de 0,5 à 2 km/h.

16. Programme informatique pouvant être chargé dans la mémoire interne d'un ordinateur dans un véhicule à moteur, le programme informatique comprenant un code de programme informatique pour amener l'ordinateur :
- à déterminer ou à recevoir une valeur de base pour une vitesse cible ;
- à déterminer ou à recevoir une valeur représentant la vitesse réelle du véhicule ;
- à commander le moteur du véhicule en fonction d'une information concernant la vitesse cible et la vitesse réelle du véhicule de façon à tenter de maintenir la vitesse du véhicule essentiellement égale à la vitesse cible ; et
- à augmenter automatiquement et temporairement ladite vitesse cible de la valeur de base à une valeur modifiée lorsqu'il est établi que les conditions suivantes sont remplies :
• il est détecté que le véhicule descend une pente descendante, et
• la résistance à l'avancement du véhicule est positive.

17. Produit de programme informatique comprenant un support de mémorisation de données lisible par une unité de commande électronique (30), un programme informatique selon la revendication 16 étant mémorisé sur ledit support de mémorisation de données.

18. Unité de commande électronique (30) comprenant des moyens d'exécution (31), une mémoire (33) connectée aux moyens d'exécution (31) et un support de mémorisation de données (34) connecté aux moyens d'exécution, dans laquelle un programme informatique selon la revendication 16 est mémorisé sur ledit support de mémorisation de données (34).
